# EUROPÄISCHE PATENTSCHRIFT

(11) **EP 2 111 683 B1**
(45) Veröffentlichungstag und Bekanntmachung des Hinweises auf die Patenterteilung: **01.09.2010**
(21) Anmeldenummer: 07856654.4
(22) Anmeldetag: 12.12.2007
(51) Int. Cl.: H02J 7/14

(54) **MEHRSPANNUNGSBORDNETZ FÜR EIN KRAFTFAHRZEUG**
AUTOMOTIVE MULTI-VOLTAGE VEHICLE ELECTRIC SYSTEM
RÉSEAU DE BORD MULTITENSION POUR VÉHICULE AUTOMOBILE

(30) Priorität: 23.01.2007 DE 102007004279
(43) Veröffentlichungstag der Anmeldung: 28.10.2009
(73) Patentinhaber: Bayerische Motoren Werke AG, 80809 München (DE)
(72) Erfinder: PROEBSTLE, Hartmut, 86159 Augsburg (DE); POLENOV, Dieter, 80807 München (DE); BROESSE, Andreas, 81375 München (DE); MUELLER, Stefan, 84034 Landshut (DE)
(74) Vertreter: Mayer-Martin, Christian
(86) Internationale Anmeldenummer: PCT/EP2007/010908
(87) Internationale Veröffentlichungsnummer: WO 2008/089823

(56) Entgegenhaltungen:
- EP-A- 1 422 803
- DE-A1- 10 247 523
- DE-A1- 10 312 082
- FR-A- 2 848 033

## Beschreibung

Die Erfindung bezieht sich auf ein Mehrspannungsbordnetz für ein Kraftfahrzeug, umfassend wenigstens einen Generator und zwei Energiespeicher.

Ein derartiges Mehrspannungsbordnetz für ein Kraftfahrzeug ist bekannt aus der DE 103 30 703 A1. Mehrspannungsbordnetze, wie sie in modernen Kraftfahrzeugen Einsatz finden können, umfassen üblicherweise zwei Bordnetzzweige unterschiedlicher Nennspannung. An dem Niederspannungs-Bordnetzzweig, dessen Nennspannung z.B. bei 12 Volt liegen kann, sind Verbraucher niedriger Leistungsaufnahme angeschlossen. An dem Hochspannungs-Bordnetzzweig, dessen Nennspannung beispielsweise 24 Volt betragen kann, sind Hochleistungsverbraucher, wie z.B. Heizungen, eine elektrische Servolenkung, elektromotorische Bremsen etc. angeschlossen. Jeder Bordnetzzweig kann dabei einen ihm zugeordneten Energiespeicher aufweisen, wobei sowohl die Verwendung von Batterien als Energiespeicher in beiden Bordnetzzweigen als auch die Verwendung einer Batterie als Energiespeicher des Niederspannungs-Bordnetzzweiges und einer Kondensatorschaltung hoher Kapazität als Energiespeicher des Hochspannungs-Bordnetzzweiges bekannt sind. Gespeist werden beide Bordnetzzweige in der Regel von einem Mehrspannungsgenerator, der beispielsweise als integrierter Startgenerator ausgebildet sein kann. Das Mehrspannungsbordnetz ist in der Regel über einen Generator mit dem Verbrennungsmotor eines Kraftfahrzeuges gekoppelt, insbesondere um durch den Verbrennungsmotor bereitgestellte Energie in das Mehrspannungsbordnetz einzuspeisen.

DE10247523 offenbart ein gattungsähnliches Mehrspannungsbordnetz für ein Kraftfahrzeug, umfassend einen ersten und einen zweiten Energiespeicher, einen ersten und einen zweiten Niederspannungsbordnetzzweig, und einen ersten Hochspannungsbordnetzzweig. Zwei Schalteinrichtungen werden derart gesteuert, dass der erste Niederspannungsbordnetzzweig über einen dc-dc Wandler mit Energie des zweiten Energiespeichers gespeist wird.

Es ist eine Aufgabe der vorliegenden Erfindung, ein Mehrspannungsbordnetz anzugeben, durch welches durch einen Motorstart verursachte Spannungseinbrüche insbesondere in einem Niederspannungs-Bordnetzzweig zumindest reduziert werden.

Diese Aufgabe wird durch die Merkmale des unabhängigen Patentanspruchs gelöst. Vorteilhafte Weiterbildungen der Erfindung sind den abhängigen Ansprüchen zu entnehmen.

Erfindungsgemäß umfasst ein Mehrspannungsbordnetz für ein Kraftfahrzeug einen Generator und einen ersten Energiespeicher, dessen Energie in einen ersten Niederspannungs-Bordnetzzweig mit ersten Niederspannungs-Verbrauchern einspeisbar ist oder eingespeist wird, und dessen Energie über eine steuerbare Schalteinrichtung in einen zweiten Niederspannungs-Bordnetzzweig mit zweiten Niederspannungs-Verbrauchern einspeisbar ist oder eingespeist wird.

Die Energie eines zweiten Energiespeichers ist in einen Hochspannungs-Bordnetzzweig einspeisbar oder wird in einen Hochspannungs-Bordnetzzweig eingespeist, und ist über einen bidirektionalen DC/DC-Wandler in den zweiten Niederspannungs-Bordnetzzweig einspeisbar oder wird in den zweiten Niederspannungs-Bordnetzzweig eingespeist. Der Hochspannungs-Bordnetzzweig ist dabei mit einer höheren Spannung betreibbar als ein Niederspannungs-Bordnetzzweig. In den Hochspannungs-Bordnetzzweig sind vorzugsweise Hochspannungs-Verbraucher geschaltet, oder Hochspannungs-Verbraucher werden über den Hochspannungs-Bordnetzzweig versorgt. Der Hochspannungs-Bordnetzzweig kann aber auch lediglich dem Auf- und Entladen des zweiten Energiespeichers dienen.

Die Energie des zweiten Energiespeichers ist vorzugsweise zudem über den DC/DC-Wandler und über die steuerbare Schalteinrichtung in den ersten Niederspannungs-Bordnetzzweig einspeisbar.

Die steuerbare Schalteinrichtung ist zwischen einer ersten Schaltungskonfiguration, in der der erste Niederspannungs-Bordnetzzweig über den DC/DC-Wandler mit Energie des zweiten Energiespeichers gespeist wird oder speisbar ist, und einer zweiten Schaltungskonfiguration, in der der erste Niederspannungs-Bordnetzzweig nicht über den DC/DC-Wandler mit Energie des zweiten Energiespeichers gespeist wird oder speisbar ist, schaltbar.

Eine Steuereinrichtung steuert die Schalteinrichtung derart, dass die Schalteinrichtung während einer Motor-Start-Phase geöffnet ist oder wird.

Vorzugsweise ist die Schalteinrichtung dabei derart zwischen ersten und zweiten Niederspannungs-Bordnetzzweig geschaltet, dass der zweite Niederspannungs-Bordnetzzweig durch ein Öffnen der Schalteinrichtung von dem ersten Niederspannungs-Bordnetzzweig im Wesentlichen entkoppelbar ist oder entkoppelt wird, und der zweite Niederspannungs-Bordnetzzweig bei geöffneter Schalteinrichtung über den DC/DC-Wandler durch den zweiten Energiespeicher mit Energie gespeist wird oder speisbar ist.

Durch die Erfindung wird mit einfachen Mitteln insbesondere erreicht, dass durch ein Öffnen der Schalteinrichtung der erste Niederspannungs-Bordnetzzweig derart von dem zweiten Niederspannungs-Bordnetzzweig entkoppelt wird, dass ein insbesondere temporärer hoher Leistungsbedarf im ersten Niederspannungs-Bordnetzzweig in der Regel nicht oder zumindest nicht zu einem nennenswerten Spannungseinbruch im zweiten Niederspannungs-Bordnetzzweig führt. Zudem wird mit einfachen Mitteln eine höhere Spannungsebene zur Versorgung eines Hochspannungs-Bordnetzzweiges bereitgestellt, wodurch eine Integration neuer leistungsintensiver Funktionen in ein Kraftfahrzeug ermöglicht wird.

Die Erfindung ist besonders vorteilhaft im Rahmen eines Kraftfahrzeuges mit einer so genannten Motor-Start-Stopp-Automatik. Dabei wird der Motor des Kraftfahrzeuges automatisch bei einer Vielzahl von Fahrzeugstillstand-Situationen gestoppt und anschließend automatisch wieder gestartet. Bei bekannten Bordnetzen führt der hohe Leistungsbedarf im Niederspannungsbordnetz, in dem der Motor-Anlasser realisiert ist, beim Startvorgang, insbesondere beim Anlassen des Motors, regelmäßig zu Spannungsschwankungen im Niederspannungsbordnetz mit negativen Auswirkungen auf die übrigen Verbraucher im Niederspannungsbordnetz.

Durch eine erfindungsgemäße Aufteilung des Niederspannungsbordnetzes in zwei Niederspannungs-Bordnetzzweige und eine entsprechende Entkoppelung durch die Schalteinrichtung, insbesondere während des Motor-Startvorganges, wird die Spannung im zweiten Niederspannungs-Bordnetzzweig nicht durch eine Spannungsschwankung im ersten Niederspannungs-Bordnetzzweig, in dem vorzugsweise der Motor-Anlasser realisiert ist, beeinflusst und kann dadurch relativ stabil gehalten werden, beispielsweise zur Versorgung eines Kraftfahrzeug-Entertainment-Gerätes.

Das Bordnetz wird dabei gegenüber bisher schon in Serie eingesetzten Bordnetzen hardwaretechnisch nur geringfügig geändert bzw. nur erweitert, so dass ein kommunaler Einsatz in gängigen Fahrzeug-/Energiebordnetztopologien technisch und ökonomisch einfach zu realisieren ist.

Im Rahmen der Erfindung liegt es auch, alternativ zur steuerbaren Schalteinrichtung einen DC/DC-Wandler einzusetzen, um die Spannung in dem zweiten Niederspannungs-Bordnetzzweig von der Spannung im ersten Niederspannungs-Bordnetzzweig zu entkoppeln, insbesondere hinsichtlich kurzzeitiger Spannungsschwankungen beispielsweise während des Motor-Start-Vorganges.

Gemäß einer vorteilhaften Weiterbildung sind der erste und der zweite Energiespeicher in Reihe miteinander verschaltet oder schaltbar, wobei der Hochspannungs-Bordnetzzweig parallel zu der Reihenschaltung aus erstem und zweitem Energiespeicher angeschlossen ist. In diesem Fall handelt es sich bei dem ersten und zweiten Energiespeicher vorzugsweise jeweils um einen Niederspannungs-Energiespeicher.

Der erste Niederspannungs-Bordnetzzweig ist dabei vorzugsweise einerseits mit einem Knoten zwischen dem ersten und dem zweiten Energiespeicher und andererseits mit einem Bezugspotential des ersten Energiespeichers verbunden oder verbindbar. Der zweite Niederspannungs-Bordnetzzweig ist vorzugsweise einerseits über die steuerbare Schalteinrichtung mit dem Knoten zwischen dem ersten und dem zweiten Energiespeicher und andererseits mit dem Bezugspotential des ersten Energiespeichers verbunden oder verbindbar. Vorzugsweise ist dabei der zweite Niederspannungs-Bordnetzzweig alternativ oder ergänzend einerseits über den zweiten Energiespeicher und den DC/DC-Wandler mit dem Knoten zwischen dem ersten und dem zweiten Energiespeicher und andererseits mit dem Bezugspotential des ersten Energiespeichers verbunden oder verbindbar.

Alternativ dazu ist der zweite Energiespeicher parallel zu dem Hochspannungs-Bordnetzzweig angeschlossen. In diesem Fall handelt es sich bei dem zweiten Energiespeicher vorzugsweise um einen Hochspannungs-Energiespeicher und bei dem ersten Energiespeicher vorzugsweise um einen Niederspannungs-Energiespeicher. Die Ausgangsspannung eines Hochspannungs-Energiespeichers ist im normalen Betriebsfall gleich oder höher als die Ausgangsspannung eines Niederspannungs-Energiespeichers.

Vorteilhafterweise umfasst der erste Energiespeicher eine Batterie und der zweite Energiespeicher eine Batterie oder einen Kondensator, insbesondere einen Doppelschichtkondensator, Superkondensator oder Supercap.

Gemäß einer vorteilhaften Weiterbildung der Erfindung ist eine Steuereinrichtung vorgesehen, die derart eingerichtet und mit der Schalteinrichtung gekoppelt ist, dass die Schalteinrichtung in Abhängigkeit vom Fahrzeugbetriebszustand geöffnet oder geschlossen wird. Alternativ oder ergänzend dazu ist die Steuereinrichtung vorzugsweise derart eingerichtet und mit dem DC/DC-Wandler gekoppelt, dass die Wandelrichtung oder Stromflussrichtung des DC/DC-Wandlers in Abhängigkeit vom Fahrzeugbetriebszustand geändert wird.

Die Steuereinrichtung ist derart eingerichtet, dass die Schalteinrichtung während einer Motor-Start-Phase (beispielsweise bei aktivem Motor-Anlasser) geöffnet ist, insbesondere mit (kurz davor oder kurz danach) dem Beginn eines Motor-Start-Vorganges (Anlasser aktiv) geöffnet wird und mit (kurz davor oder kurz danach) dem Ende eines Motor-Start-Vorganges geschlossen wird. Ansonsten (beispielsweise bei inaktivem Motor-Anlasser) ist die Schalteinrichtung vorzugsweise geschlossen.

Alternativ oder ergänzend dazu ist die Steuereinrichtung vorzugsweise derart eingerichtet und mit dem DC/DC-Wandler gekoppelt, dass die Wandelrichtung oder Stromflussrichtung des DC/DC-Wandlers während einer Motor-Start-Phase derart gerichtet ist, dass der zweite Energiespeicher die Verbraucher des zweiten Niederspannungs-Bordnetzzweiges mit Energie versorgt. Ergänzend dazu ist die Steuereinrichtung vorzugsweise derart eingerichtet und mit dem DC/DC-Wandler gekoppelt, dass die Wandelrichtung oder Stromflussrichtung des DC/DC-Wandlers während einer Phase des Motorstillstandes derart gerichtet ist, dass der zweite Energiespeicher die Energieversorgung der Verbraucher des ersten und/oder zweiten Niederspannungs-Bordnetzzweiges unterstützt (insbesondere zusätzlich zur Versorgung durch den ersten Energiespeicher).

Vorteilhafterweise ist die Steuereinrichtung derart eingerichtet, dass die Schalteinrichtung geschlossen ist, während ein Motor, insbesondere der Verbrennungsmotor, des Kraftfahrzeuges läuft, und/oder während der Motor ausgeschaltet ist, und/oder während das Fahrzeug still steht.

Alternativ oder ergänzend dazu ist die Steuereinrichtung vorzugsweise derart eingerichtet und mit dem DC/DC-Wandler gekoppelt, dass die Wandelrichtung oder Stromflussrichtung des DC/DC-Wandlers während laufenden Motors, insbesondere während des Fahrzeugbremsbetriebs und/oder des Fahrzeugschubbetriebs, derart gerichtet ist, dass der zweite Energiespeicher durch den Generator und/oder aus dem ersten Energiespeicher über die steuerbare Schalteinrichtung und/oder den DC/DC-Wandler aufgeladen wird.

Weitere Merkmale der Erfindung ergeben sich aus der nachfolgenden speziellen Beschreibung und den Zeichnungen. Es zeigen:
- Figur 1:: ein schematisches Prinzipschaltbild einer ersten Variante eines Mehrspannungsbordnetzes;
- Figur 2:: ein schematisches Prinzipschaltbild einer zweiten Variante eines Mehrspannungsbordnetzes.

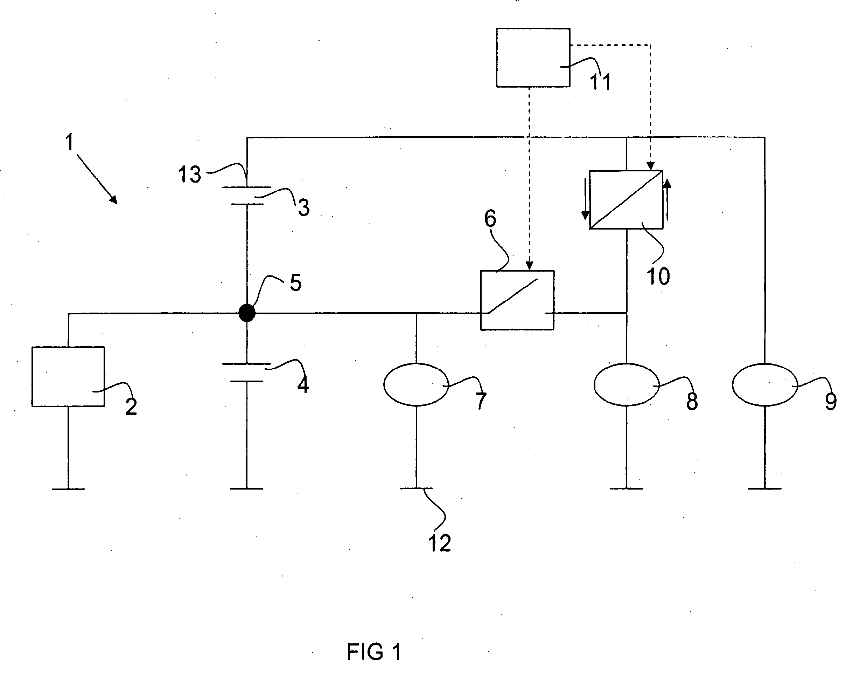

Figur 1 zeigt ein schematisches Prinzipschaltbild einer Bordnetztopologie, ausgelegt für zwei rein beispielhafte Nennspannungen von 12 (oder 14) und 24 Volt.

Als Energiequelle des Bordnetzes 1 dient ein mit einem Verbrennungsmotor eines Kraftfahrzeuges gekoppelter Generator 2. Der Begriff des Generators 2 umfasst dabei auch eine etwaige nachgeschaltete Elektronik, wie etwa eine Leistungs- oder Gleichrichtungselektronik. Im gezeigten Ausführungsbeispiel ist der Generator 2 einerseits an ein Bezugspotential 12 (Masse) angeschlossen und liefert an seinem Ausgang eine positive (ggf. wellige) Gleichspannung.

Der Ausgang des Generators 2 ist mit einem Knoten 5 verbunden. Der Knoten 5 ist zum einen mit einem ersten Niederspannungs-Bordnetzzweig und den daran angeschlossenen Verbrauchern 7 verbunden. An den Verbrauchern 7, die zumindest den Motor-Anlasser oder Motor-Starter umfassen, fällt die Niederspannung des ersten Niederspannungs-Bordnetzzweiges - im vorliegenden Fall 12 Volt - gegen Masse 12 ab.

Zudem ist der Knoten 5 über eine steuerbare Schalteinrichtung 6 mit einem zweiten Niederspannungs-Bordnetzzweig und den daran angeschlossenen Verbrauchern 8 verbunden oder verbindbar. Über den Knoten 5 werden der erste und - bei geschlossener Schalteinrichtung 6 - der zweite Bordnetzzweig durch einen ersten Energiespeicher 4, insbesondere eine 12 Volt-Batterie, und/oder den Generator 2 mit Niederspannungs-Energie gespeist.

In Reihe zu dem ersten Energiespeicher 4 ist ausgehend von dem Knoten 5 ein zweiter Energiespeicher 3, insbesondere eine 12 Volt-Batterie oder ein Kondensator, geschaltet, dessen Ausgangsspannung der Versorgungsspannung eines Hochspannungs-Bordnetzzweiges entspricht, der mit den entsprechenden Verbrauchern 9 parallel zu den in Reihe geschalteten Energiespeichern 3,4 angeschlossen ist.

Zwischen den Ausgang 13 des zweiten Energiespeichers 3 und der steuerbaren Schalteinrichtung 6 und/oder dem zweiten Niederspannungs-Bordnetzzweig ist ein bidirektionaler DC-DC-Wandler 10 geschaltet.

Der zweite Energiespeicher 3 kann bei geschlossener Schalteinrichtung 6 und einer Wandelrichtung des bidirektionalen DC-DC-Wandlers 10 von Niederspannung (12 V) zu Hochspannung (24 V) durch den Generator 2 und/oder den ersten Energiespeicher 4 aufgeladen werden; zudem kann dabei der Hochspannungs-Bordnetzzweig durch den Generator 2 und/oder den ersten Energiespeicher 4 zumindest unterstützend versorgt werden. Alternativ dazu kann der zweite Energiespeicher 3 bei geschlossener Schalteinrichtung 6 und einer Wandelrichtung des bidirektionalen DC-DC-Wandlers 10 von Hochspannung (24 V) zu Niederspannung (12 V) die Energieversorgung des ersten und zweiten Niederspannungs-Bordnetzzweiges zumindest unterstützen.

Bei geöffneter Schalteinrichtung 6 und einer Wandelrichtung des bidirektionalen DC-DC-Wandlers 10 von Hochspannung (24 V) zu Niederspannung (12 V) kann der zweite Energiespeicher 3 den zweiten Niederspannungs-Bordnetzzweig mit Energie versorgen. Die Energieversorgung des ersten Niederspannungs-Bordnetzzweiges erfolgt dann im Wesentlichen entkoppelt (durch die Schalteinrichtung 6) davon durch den ersten Energiespeicher 4.

Insbesondere bei einem Kraftfahrzeug mit Motor-Start-Stopp-Automatik wird nun durch eine entsprechend eingerichtete Steuereinrichtung 11, die vorzugsweise auch mit der Motorsteuerung bzw. dem Motor-Anlasser gekoppelt ist, und die auch zumindest teilweise im DC/DC-Wandler integriert sein kann, und entsprechende Steuerleitungen die Schalteinrichtung 6 und der DC-DC-Wandler 10 derart angesteuert:
- dass die Schalteinrichtung 6 während einer Motor-Start-Phase (Phase zwischen Motorstillstand und laufendem Motor) geöffnet ist und ansonsten, insbesondere während eines laufenden Motors des Kraftfahrzeuges und/oder während eines ausgeschalteten bzw. stillstehenden Motors des Kraftfahrzeuges geschlossen ist; und/oder
- dass die Wandelrichtung oder Stromflussrichtung des DC/DC-Wandlers 10 während einer Motor-Start-Phase derart gerichtet ist, dass der zweite Energiespeicher 3 die Verbraucher 8 des zweiten Niederspannungs-Bordnetzzweiges mit Energie versorgt; und/oder
- dass die Wandelrichtung oder Stromflussrichtung des DC/DC-Wandlers während einer Phase des Motorstillstandes derart gerichtet ist, dass der zweite Energiespeicher 3 die Energieversorgung der Verbraucher des ersten und/oder zweiten Niederspannungs-Bordnetzzweiges zumindest unterstützt; und/oder
- dass die Wandelrichtung oder Stromflussrichtung des DC/DC-Wandlers während laufenden Motors, insbesondere während des Fahrzeugbremsbetriebs und/oder des Fahrzeugschubbetriebs, derart gerichtet ist, dass der zweite Energiespeicher durch den Generator und/oder aus dem ersten Energiespeicher über die steuerbare Schalteinrichtung und/oder den DC/DC-Wandler aufgeladen wird.

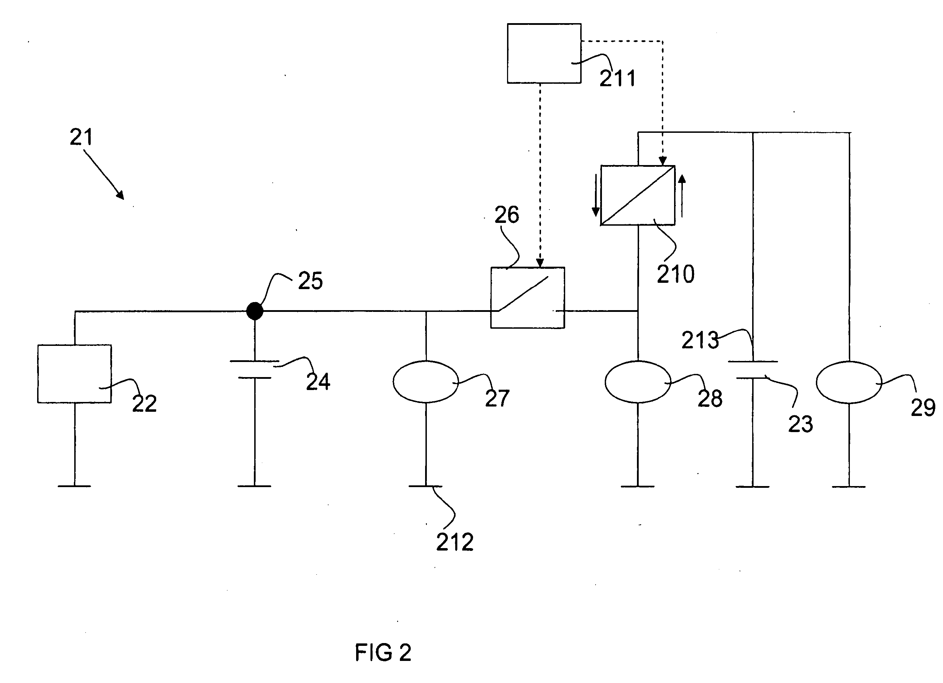

Figur 2 zeigt ein schematisches Prinzipschaltbild einer alternativen Bordnetztopologie, wieder ausgelegt für zwei rein beispielhafte Nennspannungen von 12 und 24 Volt.

Als Energiequelle des Bordnetzes 21 dient der Generator 22. Im gezeigten Ausführungsbeispiel ist der Generator 22 wieder einerseits an ein Bezugspotential 212 (Masse) angeschlossen und liefert ausgangsseitig wieder eine positive (ggf. wellige) Gleichspannung.

Der Ausgang des Generators 22 ist mit einem Knoten 25 verbunden. Der Knoten 25 ist zum einen mit einem ersten Niederspannungs-Bordnetzzweig und den daran angeschlossenen Verbrauchern 27 verbunden. An den Verbrauchern 27, die zumindest den Motor-Anlasser oder Motor-Starter umfassen, fällt die Niederspannung des ersten Niederspannungs-Bordnetzzweiges - im vorliegenden Fall 12 Volt - gegen Masse 212 ab.

Zudem ist der Knoten 25 über eine steuerbare Schalteinrichtung 26 mit einem zweiten Niederspannungs-Bordnetzzweig und den daran angeschlossenen Verbrauchern 28 verbunden oder verbindbar. Über den Knoten 25 werden der erste und - bei geschlossener Schalteinrichtung 26 - der zweite Bordnetzzweig durch einen ersten Energiespeicher 24, insbesondere eine 12 Volt-Batterie, und/oder den Generator 22 mit Niederspannungs-Energie gespeist.

In Reihe zu dem zweiten Bordnetzzweig ist ein bidirektionaler DC-DC-Wandler 210 geschaltet. Parallel zur Reihenschaltung aus zweitem Bordnetzzweig und DC-DC-Wandler 210 ist ein zweiter (Hochspannungs-)Energiespeicher 23, insbesondere eine 24 Volt-Batterie oder ein Kondensator, geschaltet, dessen Ausgangsspannung der Versorgungsspannung eines Hochspannungs-Bordnetzzweiges entspricht, der mit den entsprechenden Verbrauchern 29 parallel zu dem (Hochspannungs-)Energiespeicher 23 angeschlossen ist.

Zwischen den Ausgang 213 des zweiten Energiespeichers 23 und die steuerbare Schalteinrichtung 26 und/oder den zweiten Niederspannungs-Bordnetzzweig ist der bidirektionaler DC-DC-Wandler 210 geschaltet.

Der zweite Energiespeicher 23 kann bei geschlossener Schalteinrichtung 26 und einer Wandelrichtung des bidirektionalen DC-DC-Wandlers 210 von Niederspannung (12 V) zu Hochspannung (24 V) durch den Generator 22 und/oder den ersten Energiespeicher 24 aufgeladen werden; zudem kann dabei der Hochspannungs-Bordnetzzweig durch den Generator 22 und/oder den ersten Energiespeicher 24 zumindest unterstützend versorgt werden. Alternativ dazu kann der zweite Energiespeicher 23 bei geschlossener Schalteinrichtung 26 und einer Wandelrichtung des bidirektionalen DC-DC-Wandlers 210 von Hochspannung (24 V) zu Niederspannung (12 V) die Energieversorgung des ersten und zweiten Niederspannungs-Bordnetzzweiges zumindest unterstützen. Bei geöffneter Schalteinrichtung 26 und einer Wandelrichtung des bidirektionalen DC-DC-Wandlers 10 von Hochspannung (24 V) zu Niederspannung (12 V) kann der zweite Energiespeicher 23 den zweiten Niederspannungs-Bordnetzzweig mit Energie versorgen. Die Energieversorgung des ersten Niederspannungs-Bordnetzzweiges erfolgt dann im Wesentlichen entkoppelt (durch die Schalteinrichtung 26) davon durch den ersten Energiespeicher 24.

Insbesondere bei einem Kraftfahrzeug mit Motor-Start-Stopp-Automatik wird nun durch eine entsprechend eingerichtete Steuereinrichtung 211, die vorzugsweise auch mit der Motorsteuerung bzw. dem Motor-Anlasser gekoppelt ist, und entsprechende Steuerleitungen die Schalteinrichtung 26 und der DC-DC-Wandler 210 derart angesteuert:
- dass die Schalteinrichtung 26 während einer Motor-Start-Phase geöffnet ist und ansonsten, insbesondere während eines laufenden Motors des Kraftfahrzeuges oder während eines ausgeschalteten bzw. stillstehenden Motors des Kraftfahrzeuges geschlossen ist; und/oder
- dass die Wandelrichtung oder Stromflussrichtung des DC/DC-Wandlers 210 während einer Motor-Start-Phase derart gerichtet ist, dass der zweite Energiespeicher 23 die Verbraucher 8 des zweiten Niederspannungs-Bordnetzzweiges mit Energie versorgt; und/oder
- dass die Wandelrichtung oder Stromflussrichtung des DC/DC-Wandlers während einer Phase des Motorstillstandes derart gerichtet ist, dass der zweite Energiespeicher 23 die Energieversorgung der Verbraucher des ersten und/oder zweiten Niederspannungs-Bordnetzzweiges zumindest unterstützt; und/oder
- dass die Wandelrichtung oder Stromflussrichtung des DC/DC-Wandlers während laufenden Motors, insbesondere während des Fahrzeugbremsbetriebs und/oder des Fahrzeugschubbetriebs, derart gerichtet ist, dass der zweite Energiespeicher 23 durch den Generator 22 und/oder aus dem ersten Energiespeicher 24 über die steuerbare Schalteinrichtung 26 und/oder den DC/DC-Wandler 210 aufgeladen wird.

Natürlich stellen die in den Zeichnungen illustrierten und im Rahmen der speziellen Beschreibung erläuterten Ausführungsbeispiele lediglich exemplarische Ausführungsformen der vorliegenden Erfindungen dar. Insbesondere im Hinblick auf die gewünschten Nennspannungen der Bordnetzzweige, der Gestaltung der Verbraucher, der konkreten Auslegung des Generators und des DC-DC-Wandlers und der Realisierung der Steuerung der Schalteinrichtung und des DC-DC-Wandlers in Abhängigkeit von dem Fahrzeugbetriebszustand, insbesondere Motor-Betriebzustand, steht dem Fachmann ein breites Spektrum an Variationsmöglichkeiten zur Verfügung. Auch ist es möglich, neben den genannten Komponenten weitere Komponenten, insbesondere Energiespeicher, Verbraucherzweige oder Schalteinrichtungen, vorzusehen. Von der vorgeschlagenen Betriebsstrategie oder Ansteuerung der Schalteinrichtung und des DC-DC-Wandlers muss auch nicht ständig sondern lediglich situationsabhängig, insbesondere während eines Regelbetriebes, Gebrauch gemacht werden.

## Patentansprüche

1. Mehrspannungsbordnetz (1) für ein Kraftfahrzeug, mit
- einem Generator (2),
- einem ersten Energiespeicher (4), dessen Energie in einen ersten Niederspannungs-Bordnetzzweig mit zumindest einem ersten Niederspannungs-Verbraucher (7) einspeisbar ist, und dessen Energie über eine steuerbare Schalteinrichtung (6) in einen zweiten Niederspannungs-Bordnetzzweig mit zumindest einem zweiten Niederspannungs-Verbraucher (8) einspeisbar ist, und
- einem zweiten Energiespeicher (3), dessen Energie in einen Hochspannungs-Bordnetzzweig einspeisbar ist, und dessen Energie über einen bidirektionalen DC/DC-Wandler (10) in den zweiten Niederspannungs-Bordnetzzweig (8) einspeisbar ist,
- wobei die steuerbare Schalteinrichtung (6) zwischen einer ersten Schaltungskonfiguration, in der der erste Niederspannungs-Bordnetzzweig über den bidirektionalen DC/DC-Wandler (10) mit Energie des zweiten Energiespeichers (3) speisbar ist oder gespeist wird, und einer zweiten Schaltungskonfiguration, in der der erste Niederspannungs-Bordnetzzweig nicht über den bidirektionalen DC/DC-Wandler (10) mit Energie des zweiten Energiespeichers (3) speisbar ist oder gespeist wird, schaltbar ist,
- wobei die steuerbare Schalteinrichtung (6) in der ersten Schaltungskonfiguration geschlossen ist, und wobei die steuerbare Schalteinrichtung (6) in der zweiten Schaltungskonfiguration geöffnet ist,
und mit einer Steuereinrichtung (11) zur Steuerung der steuerbaren Schalteinrichtung (6) derart, dass die Schalteinrichtung (6) während einer Motor-Start-Phase geöffnet ist oder wird.

2. Mehrspannungsbordnetz (1) nach Anspruch 1,
- wobei der erste (4) und der zweite (3) Energiespeicher in Reihe miteinander verschaltet sind, und
- wobei der Hochspannungs-Bordnetzzweig parallel zu der Reihenschaltung aus erstem (4) und zweitem Energiespeicher (3) angeschlossen ist.

3. Mehrspannungsbordnetz (1) nach Anspruch 1 oder 2,
- wobei der erste Niederspannungs-Bordnetzzweig einerseits mit einem Knoten (5) zwischen dem ersten (4) und dem zweiten Energiespeicher (3) und andererseits mit einem Bezugspotential (12) des ersten Energiespeichers (4) verbunden ist,
- wobei der zweite Niederspannungs-Bordnetzzweig (8) einerseits über die steuerbare Schalteinrichtung (6) mit dem Knoten (5) und andererseits mit dem Bezugspotential (12) des ersten Energiespeichers (4) verbunden ist.

4. Mehrspannungsbordnetz (1) nach Anspruch 1,
- wobei der zweite (3) Energiespeicher parallel zu dem Hochspannungs-Bordnetzzweig angeschlossen ist.

5. Mehrspannungsbordnetz (1) nach einem der vorangehenden Ansprüche,
bei dem der erste Energiespeicher (4) eine Batterie und der zweite Energiespeicher (3) einen Kondensator oder eine Batterieumfasst.

6. Mehrspannungsbordnetz (1) nach einem der vorangehenden Ansprüche,
mit einer Steuereinrichtung (11), die derart eingerichtet ist, dass die Schalteinrichtung (6) in Abhängigkeit vom Fahrzeugbetriebszustand geöffnet oder geschlossen wird.

7. Mehrspannungsbordnetz (1) nach einem der vorangehenden Ansprüche,
mit einer Steuereinrichtung (11), die derart eingerichtet ist, dass die Schalteinrichtung (6) geschlossen ist, während der Motor Kraftfahrzeuges läuft, und/oder während der Motor ausgeschalten ist, und/oder während das Fahrzeug still steht.

8. Mehrspannungsbordnetz (1) nach einem der vorangehenden Ansprüche,
bei dem der zweite Energiespeicher (4) durch den Generator (2) über die steuerbare Schalteinrichtung (6) und den DC/DC-Wandler (10) aufladbar ist oder aufgeladen wird.

9. Mehrspannungsbordnetz (1) nach einem der vorangehenden Ansprüche,
bei dem der erste Niederspannungs-Bordnetzzweig einen Motor-Anlasser umfasst.

## Claims

1. A multi-voltage electrical system (1) for a motor vehicle, comprising
- a generator (2),
- a first energy store (4), the energy of which can be fed into a first low-voltage electrical system branch with at least one first low-voltage load (7), and the energy of which can be fed by means of a controllable switching device (6) into a second low-voltage electrical system branch with at least one second low-voltage load (8), and
- a second energy store (3), the energy of which can be fed into a high-voltage electrical system branch, and the energy of which can be fed by means of a bidirectional DC/DC-converter (10) into the second low-voltage electrical system branch (8),
- wherein the controllable switching device (6) can be switched between a first circuit configuration, in which the first low-voltage electrical system branch can be fed or is fed by means of the bidirectional DC/DC-converter (10) with energy of the second energy store (3), and a second circuit configuration, in which the first low-voltage electrical system branch cannot be fed or is not fed by means of the bidirectional DC/DC-converter (10) with energy of the second energy store (3),
- wherein the controllable switching device (6) is closed in the first circuit configuration, and wherein the controllable switching device (6) is open in the second circuit configuration, and comprising a control device (11) for controlling the controllable switching device (6) in such a way that the switching device (6) is open or is opened during a motor start phase.

2. A multi-voltage electrical system (1) according to claim 1,
- wherein the first (4) and the second (3) energy store are connected to one another in series, and
- wherein the high-voltage electrical system branch is connected in parallel to the series connection of the first (4) and the second energy store (3).

3. A multi-voltage electrical system (1) according to claim 1 or 2,
- wherein the first low-voltage electrical system branch is connected, on the one hand, to a node (5) between the first (4) and the second energy store (3) and, on the other hand, to a reference potential (12) of the first energy store (4),
- wherein the second low-voltage electrical system branch (8), on the one hand, is connected by means of the controllable switching device (6) to the node (5) and, on the other hand, to the reference potential (12) of the first energy store (4).

4. A multi-voltage electrical system (1) according to claim 1,
- wherein the second energy store (3) is connected in parallel to the high-voltage electrical system branch.

5. A multi-voltage electrical system (1) according to any one of the preceding claims, wherein the first energy store (4) comprises a battery and the second energy store (3) comprises a capacitor or a battery.

6. A multi-voltage electrical system (1) according to any one of the preceding claims, comprising a control device (11), which is set up in such a way that the switching device (6) is open or closed as a function of the vehicle operating state.

7. A multi-voltage electrical system (1) according to any one of the preceding claims, comprising a control device (11), which is set up in such a way that the switching device (6) is closed while the engine of the motor vehicle is running, and/or while the engine is switched off, and/or while the vehicle is at a standstill.

8. A multi-voltage electrical system (1) according to any one of the preceding claims, wherein the second energy store (4) can be charged or is charged by the generator (2) by means of the controllable switching device (6) and the DC/DC-converter (10).

9. A multi-voltage electrical system (1) according to any one of the preceding claims, wherein the first low-voltage electrical system branch comprises an engine starter.

## Revendications

1. Réseau de bord multitension (1) de véhicule automobile comportant :
- un générateur (2),
- un premier accumulateur d'énergie (4) dont l'énergie est fournie à une première branche basse tension du réseau embarqué avec au moins un premier utilisateur basse tension (7) et dont l'énergie est fournie par une installation de commutation commandée (6) à une seconde branche basse tension du réseau embarqué avec au moins un second utilisateur basse tension (8), et
- un second accumulateur d'énergie (3) dont l'énergie est fournie à une branche haute tension de réseau embarqué et dont l'énergie est fournie par un convertisseur continu/continu bidirectionnel (10) à la seconde branche basse tension (8) du réseau embarqué,
- l'installation de commutation commandée (6) est commuté entre une première configuration de commutation dans laquelle la première branche basse tension du réseau embarqué est ou peut être alimentée en énergie du second accumulateur d'énergie (3) par le convertisseur continu/continu bidirectionnel (10), et une seconde configuration de commutation dans laquelle la première branche basse tension du réseau embarqué, n'est pas alimentée ou ne peut être alimentée en énergie à partir du second accumulateur d'énergie (3), par l'intermédiaire du convertisseur bidirectionnel continu/continu (10),
- dans la première configuration de commutation, l'installation de commutation (6), commandée, est fermée et l'installation de commutation (6) commandée est ouverte dans la seconde configuration de commutation, et
- à l'aide d'une installation de commande (11) pour commander l'installation de commutation (6), celle-ci est commandée pour que pendant une phase de démarrage du moteur, l'installation de commutation (6) soit ouverte ou sera ouverte.

2. Réseau de bord multitension (1) selon la revendication 1,
selon lequel
- le premier accumulateur d'énergie (4) et le second accumulateur d'énergie (3), sont branchés en série, et
- la branche haute tension du réseau embarqué, est raccordée en parallèle au montage en série composé du premier accumulateur d'énergie (4) et du second accumulateur d'énergie (3).

3. Réseau de bord multitension (1) selon la revendication 1 ou 2,
selon lequel
- la première branche basse tension du réseau embarqué est reliée d'une part à un noeud (5) entre le premier accumulateur d'énergie (4) et le second accumulateur d'énergie (3) et d'autre part à un potentiel de référence (12) du premier accumulateur d'énergie (4),
- la seconde branche basse tension (8) du réseau embarqué, est reliée par l'installation de commutation (6) commandée, au noeud (5) et d'autre part, au potentiel de référence (12) du premier accumulateur d'énergie (4).

4. Réseau de bord multitension (1) selon la revendication 1,
selon lequel
- le second accumulateur d'énergie (3) est branché en parallèle à la branche haute tension de réseau embarqué.

5. Réseau de bord multitension (1) selon l'une des revendications précédentes,
selon lequel
le premier accumulateur d'énergie (4) comporte une batterie et le second accumulateur d'énergie (3), comporte un condensateur ou une batterie intégrée.

6. Réseau de bord multitension (1) selon l'une des revendications précédentes,
selon lequel
une installation de commande (11) est organisée de façon à ouvrir ou fermer l'installation de commutation (6) en fonction de l'état de fonctionnement du véhicule.

7. Réseau de bord multitension (1) selon l'une des revendications précédentes, comportant :
une installation de commande (11) conçue pour que l'installation de commutation (6) soit fermée pendant que le moteur du véhicule automobile tourne et/ou pendant que le moteur est coupé et/ou pendant que le véhicule est à l'arrêt.

8. Réseau de bord multitension (1) selon l'une des revendications précédentes,
selon lequel
le second accumulateur d'énergie (4) se charge ou sera chargé par le générateur (2) en passant par l'installation de commutation commandée (6) et le convertisseur continu/continu (10).

9. Réseau de bord multitension (1) selon l'une des revendications précédentes,
selon lequel
la première branche basse pression du réseau embarqué comprend un moteur de démarreur.
